# EUROPEAN PATENT APPLICATION

(11) **EP 4 835 791 A1**
(43) Date of publication of application: **04.11.2026**
(21) Application number: 24850244.5
(22) Date of filing: 30.12.2024
(51) Int. Cl.: G06Q 30/0201, G06Q 30/0251

(54) **ARTIFICIAL INTELLIGENCE-ASSISTED AUTOMATIC PROFILING METHOD FOR RECOMMENDING CUSTOMISED AUDIOVISUAL CONTENT OR DISPLAYING TARGETED ADVERTISING**

(30) Priority: 29.12.2023 PT 2023119185
(71) Applicant: Altice Labs, S.A., 3810-106 Aveiro (PT)
(72) Inventor: SALGADO D'ALÉM, Roger, 3810-106 Aveiro (PT); FERRAZ DE OLIVEIRA, Nuno Filipe, 3810-106 Aveiro (PT); ROSA BALTAZAR, Mário Miguel, 3810-106 Aveiro (PT); DUARTE CABRAL, Bruno Vitor, 3810-106 Aveiro (PT); RODRIGUES DOS SANTOS, Victor Jorge, 3810-106 Aveiro (PT)
(74) Representative: Arnaut, José Luis
(86) International application number: PCT/IB2024/063312
(87) International publication number: WO 2025/141540

(57) **Abstract**

The present invention discloses a computer-implemented method adapted to run on a single computer or in a network of computers or any other programmable devices that make use of Automatic Speech Recognition (ASR) and Generative Artificial Intelligence (GAI) techniques for the automatic generation of transcripts of audiovisual content, to which it applies advanced Natural Language Processing (NLP) techniques to automatically and continuously create catalogue metadata and a detailed profile of the consumer, containing their individual tastes and preferences, with dynamic adjustment of the profile over time, thus enabling the recommendation of other contents or content segments, as well as the presentation of targeted advertising based on the profile features. To this end, the method employs a set of algorithms that use the metadata generated and temporal information on content consumption in order to improve the accuracy of suggestions and customisation of advertisements, these being refined on the basis of the consumer's individual preferences, providing them with a more engaging and relevant viewing experience and, at the same time, boosting the assertiveness rate and effectiveness of advertising.

## Description

### FIELD OF THE INVENTION

The present invention falls within the scope of audiovisual content management. In particular, the present invention relates to the technical field of digital systems aimed at profiling the consumer and recommending audiovisual content or the contextualized presentation of advertising.

### BACKGROUND OF THE INVENTION

In recent decades, technological developments have deeply transformed the way in which audiovisual content is consumed. The proliferation of streaming and video on demand (VOD) platforms has provided consumers with an unprecedented variety of entertainment options. However, this myriad of choices has brought with it a number of challenges for the different actors.

From the consumer's point of view, one of the main challenges has been the issue of finding, choosing and accessing content that is really relevant to them, given the vast number of contents available in the catalogue and the individual preferences and tastes of each consumer.

For the operator of an audiovisual entertainment service, it is increasingly relevant to monetize and deliver real value to the customer of these services, by providing features and User Experiences (UX) that make it more efficient to find content which is in line with individual interests, boosting the consumer's perception of value regarding the content provided and, at the same time, standing out from other competitors in the market.

On the other hand, advertisers and advertising service providers want to improve the effectiveness and efficiency of converting advertisements into actual revenue for advertisers, thus increasing their profitability, and to this end it is vital to more accurately identify the target audience and the most appropriate time for the presentation of each advertisement.

The issue of finding and choosing suitable content for each consumer in streaming and video on demand services has been addressed by means of traditional solutions of recommendation systems (using collaborative, content-based or hybrid approaches) and indexed content search, with these approaches, more often than not, proving to be limited and extremely dependent on the quality and pre-existence of metadata for the contents in the catalogue.

Most traditional content recommendation algorithms use collaborative filtering, through direct comparison of past consumption patterns between consumers, based on the contents general features and metadata, but not on its substance, nor on that of the content segments or excerpts actually viewed or on the frequency and number of views, so the results are often inaccurate or do not capture the deeper essence of consumer preferences. In addition, it is difficult to deal with changes in individual consumer preferences over time.

Furthermore, the vast majority of systems for searching audiovisual content catalogues are based on conventional approaches to indexing pre-existing metadata, using, among other elements, general information such as the title, theme, genre, synopsis, cast and year of release, methods which, although they reasonably allow content of some relevance to be found, are not always able to meet the individual preferences of consumers and therefore have significant limitations.

One of the main downsides of this type of approach is the over-reliance on the pre-existence and quality of content metadata, which may not be available or of sufficient quality given that: 1) not all content providers offer, together with the content, complete or high quality metadata; 2) the manual production of said metadata, or the contracting of third party services to provide it, involves high costs for the content provider or the operator; 3) the production of metadata for content in foreign languages is sometimes difficult or even impossible and, once again, implies costs; 4) the broadcasting of live content is not consistent with the manual prior preparation of quality metadata, thus limiting the set of searchable content.

Moreover, it is common for traditional search approaches to show results for content in which the consumer is only partially interested, making it impossible to identify segments or excerpts of this content where a particular subject, topic or set of words matches the filtering criteria or takes into account the consumer's real tastes and preferences, said criteria being hereinafter referred to as profile features or, simply, features.

In addition, today's most sophisticated methods for recommending content or targeted advertising take advantage of the existence of a consumer profile, their features and information on their past consumption history and/or pattern. However, consumer profiling systems are limited to producing profile features on the basis of consumption events or pre-existing metadata which, as previously mentioned, are often of poor quality or have omissions, thus neglecting the importance of the actual content and its segmentation according to their inherent features, segments which have actually been or are actually being viewed by the consumer, the quality of the profiling therefore reflecting these same issues and being only shallow.

This invention is designed to overcome the above described limitations by using advanced Automatic Speech Recognition (ASR) and Generative Artificial Intelligence (GAI) techniques, in order to continuously (or on-demand) and automatically generating detailed textual transcripts of the audio in the audiovisual content, regardless of the language spoken, on which a semantic analysis is carried out for extracting profile features as well as segmenting the content according to theme, subject or feature, with a view to complementing pre-existing content metadata and enabling automatic, rich and time-segmented indexing. It also incorporates the processing of prior consumption, including viewing time, segments viewed and the frequency or number of views, in order to create automatic and highly detailed consumer profiling, also powered by Generative Artificial Intelligence (GAI), and with the capacity to adjust dynamically over time.

It represents a significant advance over conventional methods, allowing a deep and accurate understanding of the content, whether it is broadcast via live streaming or on-demand, and of the consumer's current viewing context, a thorough knowledge of the consumer's individual tastes and preferences, thanks to the implementation of an innovative, more comprehensive and effective approach to making recommendations and searching for audiovisual contents or content segments, or in the presentation of highly targeted advertising.

These advantages also aim at providing the consumer with a more customised and relevant user experience, thus representing a substantial progress in what concerns finding and enhancing an audiovisual content catalogue.

### SUMMARY OF THE INVENTION

The present invention discloses a computer-implemented method adapted to run on a single computer or in a network of computers or any other programmable devices that use Generative Artificial Intelligence (GAI)-assisted automatic profiling, in order to offer customised recommendations, search engines for audiovisual content or audiovisual content segments, and presentation of targeted advertising, thus responding to the aforementioned challenges that are inherent to finding, choosing and accessing them, thus ensuring that they are actually relevant to the consumer, in as much as they are in line with their individual tastes and preferences, that they are presented at the most appropriate time according to the viewing context, and that the targeted advertising is highly effective.

The method uses Automatic Speech Recognition (ASR) techniques on the audio of the content to produce textual transcripts and uses Generative Artificial Intelligence models to carry out semantic analysis of the transcripts in order to:
- identify features that mirror the true essence of the content, which can be used for indexing and performing searches on the content and be cross-referenced with the features of the individual consumer profile;
- produce metadata for segmenting audiovisual content according to each identified feature, subject or inferred themes, through an aggregated and continuous analysis of the features for each piece of content.

In addition, the method records and uses information on current or prior viewings to determine the set of contents or content segments that were actually viewed by consumers, and uses Generative Artificial Intelligence to create and run analysis models on the viewed contents or segments, and on the inferred profile features, so as to automatically and continuously setting a new, extremely detailed and customised consumer profile.

Based on the consumer's dynamic profile, the method provides the means to generate recommendations for audiovisual contents or content segments and/or targeted advertising, which:
- are relevant to the consumer, taking into account their tastes and preferences;
- look upon the viewing context, i.e. the profile features of the content or segment of content that the consumer has viewed or is viewing.

For this purpose, in its preferred embodiment, the method of the present invention is comprised of:
- at least one module for Automatic Speech Recognition (ASR) ;
- at least one module for recording, indexing and searching textual transcripts;
- at least one processing module, comprising means for Natural Language Processing (NLP) and Generative Artificial Intelligence;
- at least one module for recording information relating to an audiovisual content catalogue;
- at least one module for recording consumption history and information, containing metadata on current and past consumption;
- at least one module for generating and processing profile features, including NLP and Generative Artificial Intelligence processing tools;
- at least one module for registration of the consumer profile;
- at least one module for the profile features update;
- at least one module for audiovisual content recommendation;
- at least one module for targeted advertising;
- at least one module containing a catalogue of advertisements.

### DESCRIPTION OF THE FIGURES

The following description is based on the enclosed drawings in which, without a limiting character, the preferred embodiment of the invention is schematically represented.
**Figure** 1 illustrates a general conceptual diagram of the method, showing the various modules comprising it.
**Figure 2** illustrates a conceptual diagram on the continuous flow of metadata enrichment of the audiovisual content catalogue, using the automatic generation of textual transcripts and also the segmentation and generation of features from the transcripts.
**Figure 3** is a schematic representation of the profile features generation flow, which uses consumption information and metadata from the profiles catalogue to extract context from the segments viewed and update the consumer's profile features.
**Figure 4** illustrates the preferred embodiment for the on-demand flow of audiovisual content recommendation, where the consumer's profile features are cross-referenced with the viewing context extracted from the consumption information and catalogue metadata in order to identify new contents or content segments.
**Figure 5** contains a conceptual scheme of the targeted advertising flow, in which external targeted advertising providers register the advertisements and associate them with specific viewing contexts, which then are sent to the consumer whenever their viewing context is aligned with those associated with each advertisement.

### Reference signs:

1 - audiovisual content;
2 - module for recording information concerning a catalogue of audiovisual content, responsible for storing, indexing, searching for metadata and references to audiovisual content, as well as information on the segments that make up the content and associated metadata;
3 - Automatic Speech Recognition (ASR) module responsible for the audio processing of audiovisual contents and the automatic generation of textual transcript and respective temporal information;
4 - module for recording, indexing and searching textual transcripts of audiovisual contents or content segments;
5 - processing module for identification of segments, enriching associated metadata and associating potential advertisements with segments or profile features, using NLP and Generative Artificial Intelligence to carry out a semantic analysis of the textual transcripts;
6 - module for recording information on the consumption history, containing metadata relating to current and past consumption of audiovisual content;
7 - module for generating and processing profile features, responsible for identifying and extracting unique features from the textual transcript of the audiovisual contents or content segments that the consumer has watched or is watching and which are translated into consumer profile features;
8 - module for updating the consumer's profile features;
9 - module for registering the consumer profile, responsible for storing, indexing and searching metadata which contain the profile features;
**10** - module for the recommendation of audiovisual content based on content consumption information and consumer profile features;
**11** - targeted advertising module, responsible for determining the viewing context based upon the features of the content and the consumer's profile, obtaining a set of advertisements according to the context, as well as updating the catalogue of advertisements and subsequently updating the catalogue of contents with information on the advertisements available for each segment or feature, and for choosing the advertisements to be displayed to the consumer;
**12** - advertising supplier, external to the digital system of the invention;
**13** - module for recording information relating to an advertising catalogue;
**100** - general scheme of the system of the invention;
**200** - consumer or third-party system that uses or interacts with the digital system of the invention.

### DETAILED DESCRIPTION OF THE INVENTION

The most general advantageous configurations of this invention are described in the "Summary of the invention" section. These configurations are detailed below, according to other advantageous and/or preferred embodiments of the present invention.

The method of the present invention makes it possible to circumvent the following limitations identified in the state of the art, namely:
- the difficulty in finding, choosing and accessing audiovisual contents or content segments that are truly relevant and of interest to the consumer, given their individual preferences and tastes;
- the need to boost consumers' perception of value as regards the content provided by the operator of an audiovisual entertainment service;
- the ineffectiveness and inefficiency of converting advertisements into actual revenue for advertisers and advertising service providers;
- the inaccuracy when identifying the target audience for advertisements;
- the difficulty in the choice of the most appropriate time for the presentation of each advertisement, taking into account the viewing context of each consumer and the features of the advertisement;
- the fact that current recommendation and targeted advertising systems depend on the quality and pre-existence of metadata for the contents in the catalogue;
- the huge costs that may be involved in obtaining quality metadata;
- the difficulty in obtaining quality metadata for the different languages in which contents are made available;
- and the limitations of current recommenders because they rely mainly on the content's general information (such as the title, theme, genre, synopsis, cast, year of release, among others) to make comparisons of consumption patterns between consumers, not taking into account the actual contents or content segments which were in effect viewed and the frequency and number of views.

The system (100) enables the recommendation of new contents or content segments and the presentation of targeted advertising contextualized in time, through the automatic and continuous profiling of the consumer, using the analysis of the textual transcription of the contents or content segments actually viewed by the consumer and its subsequent analysis aimed at building the consumer's profile, as well as the analysis of the segments and extraction of the current viewing context for the presentation of targeted advertising.

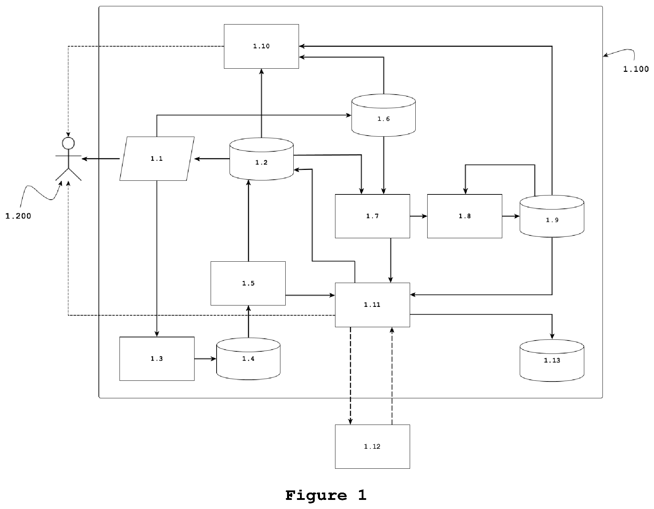

Specifically, in the system disclosed and illustrated in Figure 1 (100), there are four flows with different purposes which, together, contribute to the ultimate goal of recommending customised audiovisual contents or content segments and delivering targeted advertising to the consumer.

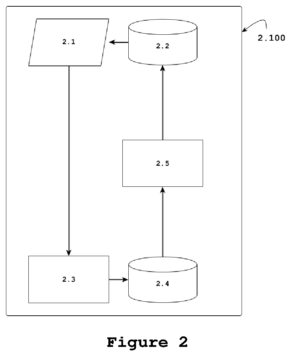

The flow of automatic enrichment of metadata from the catalogue of contents and generation of textual transcripts, shown in Figure 2, is characterized in that it continuously analyses both live and on-demand (1) audiovisual content. In this flow, the Automatic Speech Recognition module (3) uses ASR and Generative Artificial Intelligence techniques in order to automatically generate a continuous flow containing the total textual transcript of the audiovisual content.

The result of the transcription is stored, together with its temporal information, in the transcripts recording module (4) to allow indexed searching of the transcript of any content, or content segment, in the catalogue (2).

Subsequently, the module for processing and semantic analysis of textual transcripts of audiovisual content (5) applies Natural Language Processing (NLP) advanced algorithms and techniques to the textual transcripts and temporal metadata (4), with the aim of identifying and generating a flow of metadata containing the most relevant standardised features (regardless of the language of the content) for the text being analysed, duly indexed to the time of the content, including the subject or theme depicted, keywords, topics, product brands, objects referred to, personalities, and consumer's feelings, preferences, beliefs or orientations (200), namely in what concerns philosophy, arts, food, culture, technologies, politics, religion, sex or sports.

The module for the processing and semantic analysis of textual transcripts of audiovisual content (5) uses the result of the previous analysis to also generate temporal metadata and segmentation information relating to possible segmentations of audiovisual content (1), taking into account the different dimensions and features identified, in order to automatically enrich, in great detail, the metadata of the contents in the catalogue (2), which are reused by the remaining flows in the digital system (100) and are common to all consumers (200).

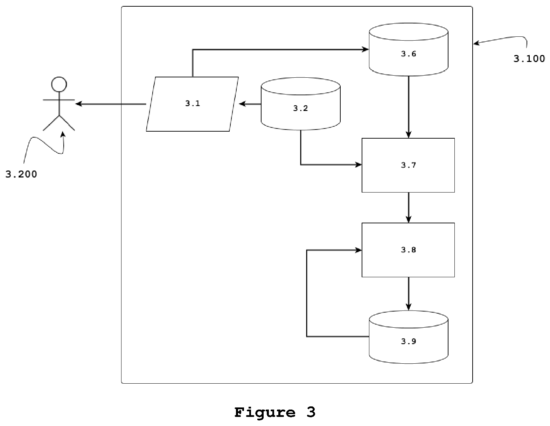

The flow for generation of the consumer profile features, as shown in Figure 3, includes the set of steps which enable the generation of a consumer profile (9) based on the features and on the content segments (1) that were actually viewed. For each consumption of content or content segment (1) made by the consumer (200), the relevant data are entered in the module for recording the consumption history and information (6).

This information relates to the period actually viewed by the consumer (200) as regards an audiovisual content (1), as well as the number and frequency of views.

In contrast with traditional profiling systems, the present invention represents an advantage, since it provides for the discarding of content segments that do not stimulate the interest of the consumer (200), promoting only those for which real interest has been expressed, which allows profiling to be much more accurate and aligned with the tastes and preferences of the consumer (200).

For each new consumption registered in the module for recording consumption history and information (6), the module for generating and processing profile features (7) cross-references the metadata indexed in the catalogue (2) with the information and consumption history (6), using NLP and Generative Artificial Intelligence in order to generate the features of the segments actually viewed, which are then communicated to the module for updating the consumer profile features (8).

Based upon the features received from the content, or content segment, that the consumer (200) is viewing or has already viewed and when checking the consumer's (200) current profile information stored in the profile registration module (9), the module for updating the consumer profile features (8) uses NLP algorithms and models as well as Generative Artificial Intelligence to generate a new consumer profile.

The new consumer profile is the result of the analysis of the features extracted from the periods viewed (which may encompass one or more content segments), jointly with the features of the current consumer profile, taking into account different factors such as the number of times and frequency that the consumer watches the content, or content segments, as well as common features or their hierarchical relation.

From this refined analysis, a consumer profile is generated which is then communicated and saved in the consumer profile registration module (9) for future re-use in other flows. The consumer profile (200) is constantly updated as more consumer information (6) is recorded.

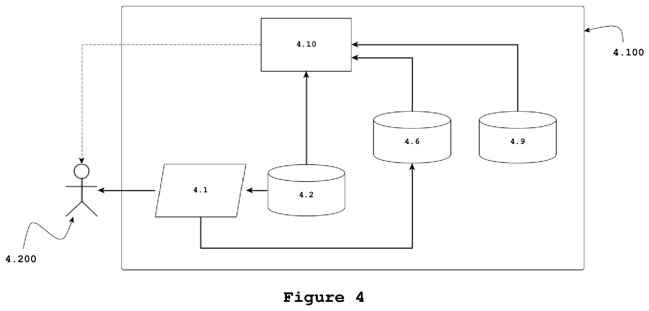

In the contents or segments recommendation flow, shown in Figure **4****,** the data generated in the automatic metadata enrichment flow (Figure 2) and the profile features generation flow (Figure 3) is reused to generate recommendations that are duly contextualized to the consumer's profile (9) as well to the viewing context and moment.

The flow can be triggered in two ways: 1) on the consumer's own initiative (200), by requesting recommendations; 2) upon determination of the module for registration of consumer information (6), which notifies the recommendations module (10) that a new viewing context has arisen.

In either case, the content recommendation module (10) checks the consumer profile recorded in the profile registration module (9) in order to obtain the current list of profile features that have been generated in the profile features generation flow (Figure 3).

The content recommendation module (10) then searches the catalogue module (2) for audiovisual contents or content segments (1) whose segmentation and features resulting from the automatic metadata enrichment flow (Figure 2), match the profile features.

In an alternative embodiment of the method, the search takes into account other criteria, whether or not explicitly indicated by the consumer, which limit the context of the recommendation **(e.g.,** narrowing the results of the content recommendation to only the comedy genre in which the consumer is interested). The search result thus corresponds to recommendations which are in line with the interests, tastes and preferences inferred for the consumer (200) and/or other criteria, and may contain multiple recommendations on contents or content segments.

Subsequently, the recommendations module (10) applies sorting and filtering criteria to the search results, taking into account the consumer's consumption history (200), with a view to prioritising unseen content, avoiding repetitions and highlighting the contents in the catalogue (2).

There is also the need to ensure that recommendations are contextualized in time, i.e. based on the analysis of the profile (9), the system records consumption habits in temporal terms and, with this information, highlights recommendations that suit not only the profile, but also the consumer's habits (200) and the time of consumption.

For this purpose, the recommendations module (10) refers to the consumption history and information module (6), and excludes recommendations whose number of views, frequency or time of viewing do not comply with the established business rules. On the other hand, the same consumption history metadata can, pursuant to said business rules, be used to rearrange the remaining recommendations, which are then sent to the consumer (200).

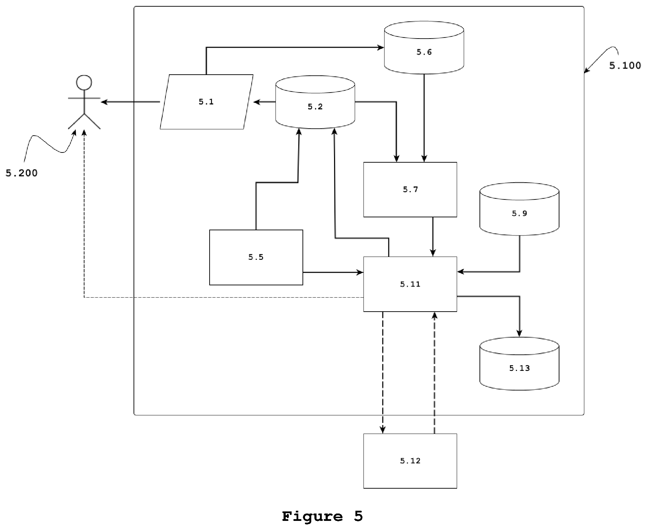

The presentation of targeted advertising, the flow of which is shown in Figure 5, is triggered by consumer actions or consumptions (200), allowing the method to determine the target audience, the best time and which advert or advertisements are suitable for the viewing context.

To make the method scalable, since it works continuously by performing a semantic analysis of the automatic transcription of all the contents and content segments available in the catalogue (both live streaming and on-demand), as well as to ensure consumer confidentiality, the advertisements catalogue module (13) records the advertisements available on its platforms, either by the advertising providers (12) or by a method adapted to this purpose, also indicating which viewing context is the most appropriate for each advertisement.

The presentation of targeted advertising is divided into three phases:
- phase **1:** supplying advertisements;
- phase 2: associating features, contents and content segments with advertisements;
- phase 3: request for advertisements or suggestion, on the system's initiative, choice and presentation of advertisements.

In a first phase, which occurs whenever one wants to promote, change or delete an advertisement in the system (100), a second method adapted for that end or an advertising provider (12) starts by registering, updating or removing the advertisement by sending an operative command to the targeted advertising module (11) containing metadata about the advertisement, including the external reference of the advertisement and the presentation context indicating a set of features, which may or may not be hierarchical.

The advertising module (11), in turn, standardises these features into internal profile features used by the system (100) and executes the update, provisioning or de-provisioning of the advertisement by sending an operative command to the advertisements catalogue module (13).

In addition, the advertising module (11) checks and updates all the contents, content segments and/or features indexed in the content catalogue module (2) to ensure synchronisation of the information signalling the existence of potential advertisements for each of these indexing dimensions.

The correspondence between the content catalogue (2) and the advertising catalogue (13) is therefore completely autonomous from the consumer and can occur asynchronously, being triggered whenever new adverts are added to or removed from the advertising catalogue, or whenever new content is added to the contents catalogue.

The digital system of the invention (100) is responsible for determining the right time, the right viewing context and the target audience with the right profile to show the adverts. However, the choice of an advert can be split between the system and the advertising provider (12), as hereinafter explained in the third phase of the targeted advertising flow.

In a second phase, and on an ongoing basis, the system reuses the content or content segment metadata generated in the automatic metadata enrichment flow (Figure 2), in particular the features, temporal information and segmentation of the content, to frame advertisements with the potential to be shown while viewing the content or content segment, which may or may not be shown according to the consumer's profile (9) and by decision of the advertising provider (12).

This process is carried out by the content processing module for segment identification (5) in the course of the automatic metadata enrichment flow (Figure 2) by querying the targeted advertising module (11), based on each of the standardised features of the content or segment under analysis, which in turn queries the advertising catalogue module (13) to obtain metadata for previously registered advertisements whose presentation context coincides with the feature or any hierarchically superior feature.

If at least one advertisement has been found for a given feature, content or segment, the content processing module for segment identification (5) sends an operative command to the content catalogue module (2) to signal and record that there is at least one advertisement with the potential to be displayed for the feature or content segment viewed by the consumer (200).

In the third phase, in which advertisements are presented to the consumer (200), the process can be triggered in two ways:
- an explicit request for advertisements by the consumer (200);
- an automatic suggestion from the advertising module (11), taking into account the viewing context in order to determine the optimum time for the advertisement to be displayed.

In the first case, the consumer (100) sends an operative command to the advertising module (11) which checks the viewing context via the profile features generation and processing module (7) which, among other metadata, provides the reference of the content, or content segment, and the features thereof.

Based upon the reference of the content or content segment, the advertising module (11) checks the contents catalogue module (2) to obtain information on whether there are advertisements for the content, content segment, or any of its features. If no ads are signalled, no advertisements will be delivered to the consumer (200) by the targeted advertising module (11).

If a potential advert is found, the targeted advertising module (11) checks the advertising catalogue (13) to obtain additional information on the adverts, such as external references belonging to the advertising provider itself or to the advertisers (12), as well as the standardised features corresponding to the context in which the advert is to be displayed.

Next, the targeted advertising module (11) queries the profile module (9) to obtain the consumer's profile features and then compares them with the features of the advert's viewing context in order to find a match between the two, also taking into account the hierarchical relation between the features, a match which indicates that the consumer (200) has the right profile for the advert to be displayed and is part of the advertising campaign's target. Furthermore, since the consumer's current viewing context has already been validated, the timing is guaranteed.

Once a match has been found, the targeted advertising module (11) sends the viewing context of the advert or adverts found in the catalogue, as well as a pseudo-anonymous identifier of the consumer and optionally an external reference of the advert to the advertising provider (12) via an operative command.

The advertising provider (12) processes the operational command to find, internally or through other advertisers with whom it may have a relationship, suitable adverts, as well as implementing capping mechanisms, among others, which are common in an advertising system. Finally, the advertising provider (12) sends the adverts and control metadata (such as impression tracking, progress, error, etc.) to the targeted advertising module (11). In turn, the targeted advertising module (11) delivers the advert or adverts to the consumer (200) and ensures that the control mechanisms required by the advertising provider (12) are complied with.

Alternatively, **i.e.** when the advert does not come from a consumer's initiative (200), it is the result of a suggestion from the digital system (100), and the flow is very similar to the first case, except that the process which triggers it is carried out by the consumption history and information recording module (6) as a result of consumption by the consumer (200).

In other words, the consumer (200), in the course of their viewing experience, starts to play a new content or content segment (1) thus resulting in an operative command being sent to the consumption history and information recording module (6). This, in turn, notifies the profile features generation and processing module (7) to start analysing and extracting the current viewing context.

Based on the features of the content, or content segment, the profile features generation and processing module (7) queries the content catalogue module (2) to obtain information on whether there are advertisements for any of the identified features or their hierarchical relation and, if there are any advertisements for any of the features, the profile features generation and processing module (7) sends an operative command to the targeted advertising module (11) so that it can start searching for matches with the consumer's profile (200). The remaining of the process is identical to that of the first case disclosed.

The advertisements that are eventually shown are the result of two processes being carried out alternatively, the first one on-demand and the second one in a continuous and active manner.

Thus, in the preferred embodiment of the artificial intelligence-assisted automatic profiling method (100) for recommending customised audiovisual content or displaying targeted advertising, it is comprised of:
- at least one module containing a catalogue of audiovisual contents available for viewing and their respective metadata (2);
- at least one module employing Automatic Speech Recognition (ASR) algorithms to automatically generate a continuous flow containing the textual transcript of the audio from the audiovisual content and the respective temporal information indexed to the content (3) ;
- at least one module for recording, indexing and searching textual transcripts (4);
- at least one processing module that uses Artificial Intelligence-assisted semantic analysis algorithms of the transcripts to generate standardised features, topics of interest and metadata for segmenting the content according to these dimensions, with a view to enriching and/or complementing the metadata in the catalogue, and also for interaction with the targeted advertising module to flag up contents or content segments for which there is potential for advertisements to be displayed (5);
- a module for recording the consumption history and information, both current and past, with which the consumer (or any digital device or system they may use) interacts to record the views of contents or content segments (6);
- at least one module responsible for generating and processing the profile features of audiovisual contents or segments thereof, actually viewed by the consumer, comprising NLP and Generative Artificial Intelligence processing means (7);
- at least one module for registering the consumer profile, comprising the means for storing, indexing and searching any metadata relating to the consumer's individual tastes and preferences, with the capacity to dynamically update the profiles (9);
- at least one module for updating the profile features, comprising means for processing a plurality of pre-existing profile features and those relating to the contents or content segments, in order to compute a new plurality of consumer profile features (8);
- at least one module for audiovisual content recommendation, employing a method for processing and recommending audiovisual contents or content segments from the catalogue, according to the consumer's profile, their consumption history and information, and other context and filtering criteria indicated by the consumer (10);
- at least one module for targeted advertising, employing means for processing the features of the audiovisual content or content segment which the consumer is watching, the indication of the existence of advertisements and the consumer's profile features in order to determine a viewing context and sending it to the external advertising provider's system, so as to obtain at least one contextualized advertisement to be delivered to the consumer (11);
- at least one module containing an advertising catalogue, responsible for recording, indexing and searching for associations between advertising references and profile features (13);

In an alternative embodiment of the proposed system, it comprises means for interconnection with an external recommendation system (10), to which it makes available, among other metadata, a pseudo-anonymous identifier of the consumer and/or consumption session, as well as their profile features and viewing context.

In an alternative embodiment of the proposed system, the advertising provider's system (12), with which the targeted advertising module interacts (11), is no longer an external system and is fully or partially integrated into the digital system of the present invention.

In an alternative embodiment of the proposed system, the consumer (200) uses a human-machine interface, through which they interact with the system to consume audiovisual contents or content segments, and where the results of the recommendations and targeted advertising are displayed.

In an alternative embodiment of the proposed system, the Automatic Speech Recognition (ASR) module for generating transcripts (3), the processing module that employs algorithms for semantic analysis of the transcripts (5) and the module responsible for generating and processing profile features regarding the audiovisual contents or content segments actually viewed (7), comprise the means required for the functions of ASR and Generative Artificial Intelligence-assisted NLP to be executed externally or cloud-based.

In an alternative embodiment of the proposed system, the module for recording textual transcripts (4) is not present and the metadata resulting from the ASR module is sent via a continuous flow of information directly to the semantic analysis and features generation module.

As will be evident to a person skilled in the art, the present invention should not be limited to the embodiments described herein, with a number of changes being possible, which remain within the scope of this invention.

Obviously, the preferred embodiments above described are combinable in the different possible forms, the repetition of all such combinations being herein avoided.

## Claims

1. A method for automatic consumer profiling and automatic redirecting of targeted advertising, **characterized in that** it comprises:
- recording the users consumptions
- textual transcription of audiovisual content and recording of the respective temporal information;
- semantic segmentation of temporal and textual transcripts with the aid of NLP algorithms
- extraction of the features relating to each textual and temporal segment using GAI
- cross-referencing the technical features of the audiovisual content with the consumption history in order to identify user profiles
- comparing the profile features with those of an advertising catalogue

2. A system for automatic consumer profiling and redirecting of targeted advertising, **characterized in that** it comprises:
- at least one Automatic Speech Recognition (ASR) module, adapted for the audio processing of audiovisual contents and automatic generation of textual transcripts and respective temporal information;
- at least one module for recording, indexing and searching textual transcripts generated by the Automatic Speech Recognition module, their temporal information and reference to audiovisual contents;
- at least one processing module, comprising Natural Language Processing (NLP) and Generative Artificial Intelligence (GAI) tools for carrying out the semantic analysis of textual transcripts from audiovisual content, intended to generate relevant metadata duly indexed to the time of the content in order to enrich and/or complement pre-existing ones, resulting in the identification of features of the transcripts and a temporal segmentation of said features;
- at least one module for recording information on an audiovisual content catalogue, with:
o capacity for storing, indexing and searching metadata and references to audiovisual contents or content segments;
o capacity for storing, indexing and searching metadata containing references to advertisements and their relation with audiovisual content or any of its segments;
- at least one module for recording consumption history and information, containing metadata relating to current and prior consumption of audiovisual content by the consumer, including temporal information on the segments viewed and the number of views;
- at least one module responsible for generating and processing profile features, comprising NLP and Generative Artificial Intelligence processing means to:
o querying or reacting to a stimulus from the module for recording the consumption history so as to obtain references and temporal information on the audiovisual contents or content segments that are actually viewed by the consumer;
o querying, based on the references and temporal information of the content or some of its segments, the module for recording information relating to a catalogue of audiovisual content in order to obtain a set of all the features of the textual transcripts for the intervals and content viewed;
o identifying and generating unique textual transcription features that translate into consumer profile features and sending them to the module for updating the consumer profile;
o coordinating communication between the modules for recording the catalogue information, recording the consumption history and updating the consumer profile features;
- at least one consumer profile registration module, comprising the means to store, index and search any metadata relating to the consumer's individual tastes and preferences, with the capacity to dynamically updating the profiles;
- at least one module for updating the profile features, comprising the means to:
o querying or reacting to a stimulus from the profile features generation and processing module, to obtain a plurality of features relating to the audiovisual content or content segment;
o querying the consumer profile registration module to obtain a plurality of current consumer profile features;
o processing the plurality of pre-existing profile features relating to the content or content segment in order to compute a new plurality of consumer profile features to reflect the trend on the consumer's tastes and preferences;
o communicating the new plurality of computed features to the profile registration module.

3. A system according to claim 1, **characterized in that** the Natural Language Processing (NLP) and Generative Artificial Intelligence module also comprises means for querying or reacting to a stimulus from a targeted advertising module to obtain information regarding the existence of advertisements relevant and appropriate to the consumption context, which share at least one of the features identified in the transcript of the audiovisual content or segment, or any hierarchically superior feature, as well as sending operative commands to the catalogue module to record the classification of contents or segments in what concerns the existence of advertisements.

4. A system according to claim 1 or 2, **characterized in that** the processing, generation of textual transcripts, their analysis and the generation of profile features can be carried out on both pre-recorded and live broadcast audiovisual content.

5. A system according to claims 1, 2 or 3, **characterized in that** the processing, generation of textual transcripts, their analysis and generation of profile features can be carried out on segments or excerpts of pre-recorded or live broadcast audiovisual content.

6. A system according to any of the preceding claims, **characterized in that** it comprises at least one audiovisual content recommendation module, which employs a method for:
- Processing and recommending audiovisual contents or segments thereof according to:
o the consumer's personal tastes and preferences, stored in their profile and corresponding to profile features inferred by NLP and Generative Artificial Intelligence processing on the textual transcripts of the segments actually viewed;
o the audiovisual content in the catalogue, previously indexed according to the features identified by means of the module for processing and semantic analysis of the audio transcripts of the audiovisual content;
o the information and history of the consumption previously or currently made by the consumer;
o other filtering and context criteria indicated by the consumer.
- Coordination of communication between the modules for catalogue information recording, consumption information and history recording, and consumer profile registering;
- Sending an operative command to a third-party system, containing a plurality of recommendations for audiovisual contents or content segments, wherein the third-party system may or may not contain a human-machine interface for presenting the results to the consumer.

7. A system according to claim **5, characterized in that** audiovisual contents or content segments in a catalogue are recommended, whose metadata includes features identical or similar to those found in the consumer's profile and/or those of the audiovisual content they are watching.

8. A system according to claims 4, 5 or 6, **characterized in that** it highlights the specific moment or content segment the consumer is watching, in order to recommend new segments or excerpts of audiovisual content whose metadata includes features that are identical or similar to those found in the consumer's profile and/or those of the audiovisual content or content segment the consumer is watching.

9. A system according to claims 1, 2, 3 or 4, **characterized in that** it comprises at least one targeted advertising module, employing means for:
- querying or reacting to a stimulus from the module for generation and processing of profile features, to obtain metadata on the audiovisual content or content segment that the consumer is watching, including temporal information, reference to the content in the catalogue, a plurality of features of the textual transcript which are associated with it and an indication of the existence of advertisements per feature;
- obtaining the features of the consumer profile by checking the metadata stored in the consumer profile register;
- processing the metadata containing the features of the consumer profile, the catalogue metadata containing the features of the textual transcript of the audio from the audiovisual content or content segment viewed, so as to determine a viewing context:
o consisting of a plurality of common features between the profile and the content or content segment;
o wherein there is an indication of the existence of at least one available advertisement.
- sending the viewing context to at least one external advertising provider's system to obtain at least one contextualized advertisement to be delivered to the consumer;
- coordinating the communication between the modules for the generation and processing of profile features, the profile registration, the catalogue registration and the external advertising provider's system.

10. A system according to claim 8, **characterized in that** it comprises means for:
- enabling the external advertising provider's system to indicate the existence of advertisements and in which viewing context they should preferably be presented to the consumer;
- enabling the external advertising provider's system to change or delete a previous indication of the existence of advertisements;
- mapping textual features contained in a catalogue with the viewing contexts indicated by the external advertising provider;
- sending an operative command to the content catalogue registration module for recording the existence of at least one advertisement for at least one textual feature;
- sending an operative command to the content catalogue registration module for modifying or deleting a previous record of the existence of advertisements for at least one textual feature.

11. A system according to claim 9, **characterized in that** it comprises at least one module containing a catalogue of advertisements, responsible for recording, indexing and searching for associations between advertisements references provided by the external advertising supplier and viewing contexts in which the advertisements should preferably be displayed, wherein a viewing context is determined by a plurality of profile features.

12. A system according to claim 9, **characterized in that** it comprises means for:
- enabling an operative command to be received from the module for semantic analysis processing of the textual transcripts so that, on an ongoing basis, the existence of registered advertisements is assessed for each textual feature found in the content or content segment;
- querying the advertising catalogue module to determine the existence of advertisements that should be presented in a given viewing context or profile feature;
- sending an operative command to the content catalogue module in order to record the non-existence or existence of at least one advertisement, across all contents or content segments and per feature.

13. A system according to claims 8, 9 or 10, **characterized in that**:
- it comprises means for querying the registration module and establish an association between advertisements and features and thus obtaining the list of advertisement references corresponding to the list of features of the viewing context;
- it incorporates a confidentiality mechanism so as to avoid sending the viewing context to the external advertising provider's system, sending instead a plurality of external references for advertisements.

14. A system according to claims 8, 9, 10, 11 or 12, wherein the module responsible for generating and processing the profile features, based upon the consumption information, comprises means for sending an operative command containing the identified features to the targeted advertising module.

15. A system according to claims 8, 9, 10, 11, 12 or 13, **characterized in that** the targeted advertising module highlights the specific moment or content segment the consumer is watching, as well as its features, for better contextualisation of the advertisements based on the products or experiences the consumer is actually viewing.

16. A system according to claims 5, 6, or 7, **characterized in that** it comprises means for interconnecting to an external recommendation system, to which it makes available:
- the pseudo-anonymous identifier of the consumer and/or consumption session;
- the consumer's profile features;
- the features of the audiovisual content being viewed;
- the features of the segment or excerpt the consumer is watching;
- metadata of the audiovisual content in the catalogue.

17. A system according to claims 5, 6, 7 or 15, **characterized in that** the recommendations module comprises means with the capacity to filter or rearrange the recommendations according to the criteria arising from the consumer's consumption history, also being provided with the means to:
- exclude or include audiovisual content already viewed by the consumer;
- give greater or lesser emphasis by rearranging the results, moving content that has not yet been viewed to the top or bottom of the list of recommendations.

18. A system according to claims 8, 9, 10, 11, 12 or 13, **characterized in that** it fully or partially incorporates the advertising provider's system.

19. A system, according to any of the preceding claims, **characterized in that** a human-machine interface can be integrated for purposes of visual, audio or textual feedback.

20. A system, according to any of the preceding claims, **characterized in that** it comprises an audiovisual content recommendation module and a targeted advertising module, both of them based on a consumer profiling model and metadata describing the content inferred and generated from automatic textual transcripts.

21. A system according to any of the preceding claims, **characterized in that** the profiling module uses and enables the storage, search and indexing of profiling information explicitly provided by the consumer, in addition to inferred information.

22. A system according to any of the preceding claims, **characterized in that** the Automatic Speech Recognition (ASR) module for generating transcripts, the processing module that employs algorithms for semantic analysis of the transcripts, and the module responsible for generating and processing profile features as regards the audiovisual contents or content segments actually viewed, comprise the means required for the functions of ASR and Generative Artificial Intelligence-assisted NLP to be executed externally or cloud-based.

23. A system, according to any of the preceding claims, **characterized in that** the content viewed may relate to live or deferred broadcasts, listed in an Electronic Program Guide (EPG), or to an on-demand catalogue.

24. A system according to any of the preceding claims, wherein the module for recording textual transcripts is not present and wherein the metadata resulting from the ASR module is sent via a continuous flow of information directly to the module for semantic analysis and extraction of profile features.

25. A system according to any of the preceding claims, where the NLP and Generative Artificial Intelligence processing module responsible for the semantic analysis of the textual transcriptions, extraction of the features and segmentation of the content, comprises the means to, regardless of the language spoken on the content, perform an automatic translation and standardisation of its features.
